# EUROPÄISCHE PATENTANMELDUNG

(11) **EP 1 568 941 A1**
(43) Veröffentlichungstag der Anmeldung: **31.08.2005**
(21) Anmeldenummer: 05003620.1
(22) Anmeldetag: 19.02.2005
(51) Int. Cl.: F23D 11/40, F16L 37/252, F23C 9/00

(54) **Mischeinrichtung für einen Öl- oder Gasgebläsebrenner**

(30) Priorität: 28.02.2004 DE 102004009787
(71) Anmelder: BBT Thermotechnik GmbH, 35576 Wetzlar (DE)
(72) Erfinder: Bachmann, Oliver, 35452 Heuchelheim (DE); Hermer, Uwe, 35457 Lollar (DE); Wagner, Alfred, 35457 Lollar (DE)

(57) **Zusammenfassung**

Die Erfindung betrifft eine Mischeinrichtung für einen Öl- oder Gasgebläsebrenner, mit einem Brennerrohr (1), welches in einen zugeordneten Brennraum hineinragt, aus einem vorzugsweise keramischen Werkstoff besteht, an einem vorzugsweise stationären Stützrohr (3) aus Metall befestigt ist, Öffnungen (2) für die Rezirkulation von Abgasen aus dem umgebenden Brennraum aufweist und einer im Bereich der stromaufwärts liegenden Basis angeordneten Blende (6) zugeordnet ist, welche mit einer Dichtung (4) am nach innen eingezogenen Ende des Stützrohres (3) anliegt.

Aufgabe der Erfindung ist es, bei einer Mischeinrichtung für einen Öl- oder Gasgebläsebrenner die Verbrennungsqualität, Robustheit und Montagefreundlichkeit zu optimieren.

Erfindungsgemäß ist daher vorgesehen, dass das Brennerrohr (1) mit seiner Stirnseite an einer zugeordneten Fläche an der Stirnseite des Stützrohres (3) anliegt und dass das Stützrohr (3) an seiner Vorderseite mindestens auf einem Teil des Umfangs einen oder mehrere Vorsprünge (8) besitzt, welche nach innen offene Kammern (9) bilden, mindestens einen radial hervorspringenden Bund (10) des Brennerrohres (1) übergreifen und dieses fixieren.

## Beschreibung

Die Erfindung betrifft eine Mischeinrichtung für einen Öl- oder Gasgebläsebrenner nach dem Oberbegriff des Patentanspruches 1.

Derartige Gebläsebrenner sind allgemein bekannt. Zum Beispiel zeigt die EP 0 683 883 B1 einen Blaubrenner mit einem Brennerrohr, welches in einen zugeordneten Brennraum hineinragt und an einem vorzugsweise stationären Stützrohr befestigt ist. An der stromaufwärts liegenden Basis ist dem Brennerrohr eine Blendenanordnung zugeordnet und im blendennahen Bereich befinden sich Öffnungen für die Rezirkulation von Abgasen aus dem umgebenden Brennraum. Damit werden insbesondere die Stickoxid-Emissionen reduziert, weil die Flamme vom rezirkulierenden Abgas gekühlt wird. Für eine optimale Verbrennung ist eine genaue Dosierung der Rezirkulation wichtig, so dass die Öffnungen im Brennerrohr sorgfältig auf die Blendenanordnung abgestimmt sein müssen.

Bekannte Brennerrohre werden aus Stahlblech hergestellt oder bestehen aus einem einstückigen keramischen Formteil. Dabei kommen keramische Brennerrohre besonders dann zum Einsatz, wenn im Betrieb eine starke Temperaturbelastung auftritt, für die selbst spezielle Stahlsorten nicht geeignet wären. So enthält auch die DE 198 32 131 C1 ein Flammrohr, dessen Mantel aus zwei unterschiedlichen, miteinander verbundenen Rohrhülsen aufgebaut ist, von denen diejenige Rohrhülse, die zur Festlegung am Stützrohr vorgesehen ist, aus Stahl und diejenige Rohrhülse, die im Wesentlichen den Brennraum des Brenners umgibt, aus Keramik gefertigt ist. Dabei soll mit dem metallischen Teil des Flammrohrmantels das Einstecken und Verstellen im umgebenden Stützrohr sichergestellt werden, denn damit wird ein Rezirkulationsquerschnitt zwischen dem stützrohrseitigen Ende des Flammrohres und dem Stützrohr selbst eingestellt.

Beispielsweise liegt auch gemäß der EP 0 683 883 B1 das Brennerrohr mit einem radial nach außen abstehenden Bund direkt an einer nach innen gerichteten Einschnürung des Stützrohres an, und die Blende verpresst diese Bauteile unter Zwischenlage einer Dichtung. Dabei sorgt die Dichtung durch den axial gerichteten Druck für eine sichere Abdichtung zwischen der Blende und dem Bund des Brennerrohres. Der Durchtritt von Luft in den Brennraum vor der Blende wird unterbunden. Diese Anordnung hat jedoch den Nachteil, dass die Dichtung sehr sorgfältig eingesetzt werden muss und möglicherweise am Stützrohr, dass heißt in radialer Richtung, nicht vollständig zur Anlage kommt. In diesem Fall könnte Luft aus dem stromaufwärtigen Bereich vor der Blende, wo ein relativ hoher Druck vorherrscht, sehr leicht über die dichtungslose Anlagefläche zwischen dem Stützrohr und dem Bund des Brennerrohres in den umgebenden Feuerraum mit niedrigerem Druck strömen. Abgasseitig würden dann andere Verbrennungswerte gemessen als tatsächlich in der Brennzone vorherrschen. Fehleinstellungen, nicht optimaler Brennerbetrieb oder eventuell sogar Funktionsstörungen wären dabei die unerwünschten Folgen.

Der Erfindung liegt daher die Aufgabe zugrunde, bei einer Mischeinrichtung für einen Öl-oder Gasgebläsebrenner die Verbrennungsqualität, Robustheit und Montagefreundlichkeit zu optimieren.

Erfindungsgemäß wurde dies mit den Merkmalen des Patentanspruches 1 gelöst. Vorteilhafte Weiterbildungen sind den Unteransprüchen zu entnehmen.

Das Brennerrohr liegt mit seiner Stirnseite an einer zugeordneten Fläche an der Stirnseite des Stützrohres an und das Stützrohr besitzt an seiner Vorderseite mindestens auf einem Teil des Umfangs einen oder mehrere Vorsprünge. Diese bilden nach innen offene Kammern, übergreifen mindestens einen radial hervorspringenden Bund des Brennerrohres und fixieren diesen. Zum Ausbilden mindestens einer nach innen offenen Kammer oder einer umlaufenden Nut reicht der mindestens eine Vorsprung an der Vorderseite des Stützrohres etwa genau so weit radial nach innen wie das nach innen eingezogene Ende des Stützrohres. Der Innendurchmesser des mindestens einen Vorsprungs entspricht etwa dem Außendurchmesser des Brennerrohres.

Bei einer ersten Ausführungsform der Erfindung ist ein Vorsprung an der Vorderseite des Stützrohres angebracht, welcher etwa die Hälfte der Vorderseite, vorzugsweise den unteren Bereich, des Stützrohres einnimmt. Er umgreift somit etwa auf dem halben Umfang den radial hervorspringenden Bund an der Basis des Brennerrohres. So kann das Brennerrohr bzw. dessen Bund von der Oberseite her in die darauf maßlich abgestimmte Nut am Vorsprung eingesetzt werden.

Bei einer anderen Variante sind mehrere Vorsprünge mit nach innen offenen Kammern an der Vorderseite des Stützrohres alternierend in Umfangsrichtung angebracht und der zugeordnete, radial hervorspringende Bund am Brennerrohr gliedert sich in mehrere Teilstücke auf. Diese Teilstücke sind jeweils in eine Lücke zwischen den Vorsprüngen einzufügen und durch radiales Verdrehen des Brennerrohres hinter den Vorsprüngen in Eingriff zu bringen.

Generell können sowohl der radial hervorspringende Bund am Brennerrohr an einer Stelle als auch dessen einzelne Teilstücke jeweils für sich auf der der Anlagefläche gegenüberliegenden Seite mit einer Schrägfläche versehen sein oder eine zunehmende Dicke aufweisen. Beim radialen Verdrehen des Brennerrohres erfolgt ein Verspannen hinter den zugeordneten Vorsprüngen nach Art eines Bajonettverschlusses.

Alternativ dazu können der radial hervorspringende Bund oder dessen einzelne Teilstücke am Brennerrohr auch durchgehend eine gleiche Dicke aufweisen. Dann sind die zugeordneten Vorsprünge an der Vorderseite des Stützrohres derart schräg angebracht, dass sich eine in Umfangsrichtung verkleinernde Kammer unter jedem Vorsprung ergibt, welche beim radialen Verdrehen des Brennerrohres ein Verspannen mit dessen zugeordnetem Bund oder mit dessen einzelnen Teilstücken nach Art eines Bajonettverschlusses sicherstellt.

Die Vorsprünge sind vorzugsweise auf dem Umfang an der Vorderseite des Stützrohres angeschweißt. Ergänzend kann mit einer Sicherungsvorrichtung, beispielsweise einer umbiegbaren Lasche, das Verdrehen das Brennerrohres in radialer Richtung gegenüber dem Stützrohr verhindert werden.

Weiterhin können Brennerrohr und Stützrohr im Bereich des mindestens einen Vorsprungs mit der mindestens einen nach innen offenen Kammer durch einen Umformvorgang fixiert werden. Dabei wird der Vorsprung zunächst am Stützrohr angebracht, bleibt aber so zur Vorderseite hin offen oder ausgestellt, dass der radial hervorspringende Bund des Brennerrohres eingefügt werden kann. Danach wird der Vorsprung zum Beispiel durch einen Biege- oder Walzvorgang so umgeformt, dass er den Bund des Brennerrohres übergreift und die beiden Bauteile, besonders in axialer Richtung, fest miteinander zur Anlage bringt.

Mit den erfindungsgemäßen Maßnahmen werden bei einer Mischeinrichtung für einen Öl-oder Gasgebläsebrenner die Verbrennungsqualität, die Robustheit und die Montagefreundlichkeit optimiert sowie ein vorzugsweise aus einem keramischen Werkstoff bestehendes Brennerrohr sicher angebaut.

Es wird erfindungsgemäß durch den in einer ringförmigen Kammer aufgenommenen Bund des Brennerrohres ein Labyrinthabdichtung gebildet. Diese befindet sich vor dem nach innen eingezogenen Ende des Stützrohres. Dadurch gelangt eventuell im Bereich der Dichtung zwischen der Blende und dem eingezogenen Ende des Stützrohres hindurch tretende Verbrennungsluft aus dem stromaufwärtigen Bereich vor der Blende immer in das Brennerrohr und somit in den Bereich der Flamme. Weil innerhalb des Brennerrohres und im Feuerraum der gleiche Druck vorherrscht, tritt die Verbrennungsluft nicht durch das Labyrinth mit dem Bund des Brennerrohres in der ringförmigen Kammer nach außen in den Feuerraum aus. Zusätzlich kann im Bereich der Anlagefläche zwischen dem Bund des Brennerrohres und dem Stützrohr, also innerhalb der Vorsprünge, auch noch eine weitere Dichtung eingefügt werden. Diese dient dann im Wesentlichen zur Dämpfung, zur Vergleichmäßigung der Anpresskraft und zum Ausgleich von Toleranzen im Zusammenhang mit dem keramischen Brennerrohr.

Daher werden an die Dichtung selbst, an die damit verbundenen Toleranzen im Dichtbereich sowie an das Einsetzen nun keine besonderen Anforderungen mehr gestellt. Begründet ist dies damit, dass sich geringe Leckströme aus dem stromaufwärtigen Bereich vor der Blende im Dichtbereich nicht negativ bemerkbar machen, weil diese Verbrennungsluft direkt an der Verbrennung teilnimmt. Abgasseitig gemessene Verbrennungswerte beziehen sich somit auch auf die tatsächlich in der Brennzone vorherrschenden Bedingungen. Fehleinstellungen, nicht optimaler Brennerbetrieb oder eventuell sogar Funktionsstörungen werden dadurch vermieden.

Die Zeichnung stellt ein Ausführungsbeispiel der Erfindung dar. Es zeigt:
- Fig. 1:: einen senkrechten Längsschnitt durch eine Mischeinrichtung eines Öl- oder Gasgebläsebrenners und
- Fig. 2:: ein Brennerrohr für einen Öl- oder Gasgebläsebrenner in der Seitenansicht.

Die Mischeinrichtung für einen Öl- oder Gasgebläsebrenner besteht im Wesentlichen aus einem Brennerrohr 1 mit Öffnungen 2 für die Rezirkulation von Abgasen aus dem umgebenden Brennraum, vorzugsweise aus einem keramischen Werkstoff, einem Stützrohr 3 aus Metall, einer ringförmigen Dichtung 4, einer zentralen Brennstoffdüse 5 sowie einer Blende 6 mit Durchtrittsöffnungen 7 für die Verbrennungsluft.

Das Brennerrohr 1 liegt mit seiner Stirnseite an einer zugeordneten Fläche, nämlich dem rundum eingezogenen Ende des Stützrohres 3, an. Mindestens auf einem Teil des Umfangs besitzt das Stützrohr 3 an seiner Vorderseite einen oder mehrere Vorsprünge 8, welche nach innen offene Kammern 9 bilden. In diesen wird einen radial hervorspringender Bund 10 des Brennerrohres 1 aufgenommen und fixiert.

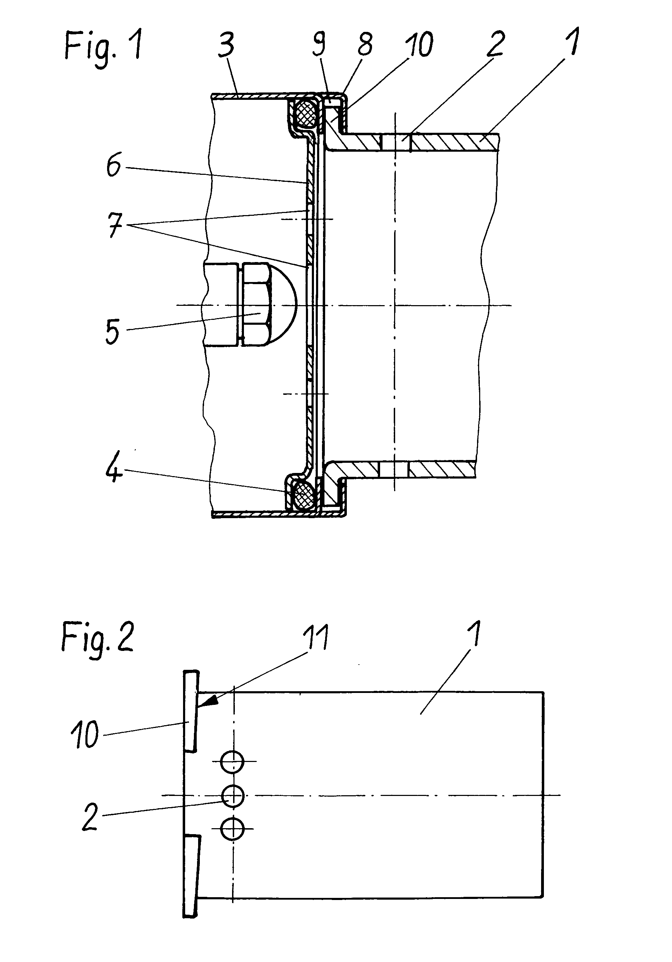

Zum Ausbilden eines Bajonettverschlusses sind mehrere Vorsprünge 8 mit nach innen offenen Kammern 9 an der Vorderseite des Stützrohres 3 alternierend in Umfangsrichtung angebracht. Dann ist der zugeordnete, radial hervorspringende Bund 10 am Brennerrohr 1 gemäß Fig. 2 in mehrere Teilstücke aufgegliedert, welche jeweils in eine Lücke zwischen den Vorsprüngen 8 einzufügen und durch Verdrehen des Brennerrohres in den Kammern 9 zum Eingriff zu bringen sind. Eine Sicherung des Brennerrohres 1 in Einbaulage wird dadurch erreicht, dass die einzelnen Teilstücke des radial hervorspringenden Bundes 10 auf der der Anlagefläche gegenüberliegenden Seite mit einer Schrägfläche 11 versehen sind oder eine zunehmende Dicke aufweisen.

Die Dichtung 4 befindet sich zwischen der Blende 6 und dem nach innen eingezogenen Ende des Stützrohres 3. Möglicherweise in diesem Bereich hindurch tretende Verbrennungsluft wird umgelenkt, gelangt daher in die Flammenzone und tritt wegen der labyrinthartigen Gestaltung der Kammer 9 nicht in den umgebenden Feuerraum aus.

## Patentansprüche

1. Mischeinrichtung für einen Öl- oder Gasgebläsebrenner mit einem Brennerrohr (1), welches in einen zugeordneten Brennraum hineinragt, aus einem vorzugsweise keramischen Werkstoff besteht, an einem vorzugsweise stationären Stützrohr (3) aus Metall befestigt ist, Öffnungen für die Rezirkulation von Abgasen aus dem umgebenden Brennraum aufweist und einer im Bereich der stromaufwärts liegenden Basis angeordneten Blende (6) zugeordnet ist, die mit einer Dichtung (4) am nach innen eingezogenen Ende des Stützrohres anliegt,
**dadurch gekennzeichnet, dass** das Brennerrohr (1) mit seiner Stirnseite an einer zugeordneten Fläche an der Stirnseite des Stützrohres (3) anliegt und dass das Stützrohr (3) an seiner Vorderseite mindestens auf einem Teil des Umfangs einen oder mehrere Vorsprünge (8) besitzt, welche nach innen offene Kammern (9) bilden, mindestens einen radial hervorspringenden Bund (10) des Brennerrohres (1) übergreifen und dieses fixieren.

2. Mischeinrichtung nach Anspruch 1,
**dadurch gekennzeichnet, dass** der mindestens eine Vorsprung (8) an der Vorderseite des Stützrohres (3) zum Ausbilden mindestens einer nach innen offenen Kammer (9) etwa genau so weit radial nach innen reicht wie das nach innen eingezogene Ende des Stützrohres (3) und etwa dem Außendurchmesser des Brennerrohres (1) entspricht.

3. Mischeinrichtung nach den Ansprüchen 1 oder 2,
**dadurch gekennzeichnet, dass** ein Vorsprung an der Vorderseite des Stützrohres (3) angebracht ist, welcher etwa die Hälfte der Vorderseite des Stützrohres (3) einnimmt und somit etwa die Hälfte des radial hervorspringenden Bundes (10) auf dem Durchmesser des Brennerrohres (1) umgreift.

4. Mischeinrichtung nach einem der Ansprüche 1 oder 2,
**dadurch gekennzeichnet, dass** mehrere Vorsprünge (8) mit nach innen offenen Kammern (9) an der Vorderseite des Stützrohres (3) alternierend in Umfangsrichtung angebracht sind, und dass der zugeordnete, radial hervorspringende Bund (10) am Brennerrohr (1) sich in mehrere Teilstücke aufgliedert, welche jeweils in eine Lücke zwischen den Vorsprüngen (8) einzufügen und durch radiales Verdrehen des Brennerrohres (1) hinter den Vorsprüngen (8) zum Eingriff zu bringen sind.

5. Mischeinrichtung nach einem der Ansprüche 1 bis 4,
**dadurch gekennzeichnet, dass** der radial hervorspringende Bund (10) am Brennerrohr (1) an einer Stelle oder dessen einzelne Teilstücke jeweils für sich auf der der Anlagefläche gegenüberliegenden Seite mit einer Schrägfläche (11) versehen sind oder eine zunehmende Dicke aufweisen, welche beim radialen Verdrehen des Brennerrohres (1) ein Verspannen hinter den zugeordneten Vorsprüngen (8) nach Art eines Bajonettverschlusses sicherstellt.

6. Mischeinrichtung nach einem der Ansprüche 1 bis 4,
**dadurch gekennzeichnet, dass** der radial hervorspringende Bund (10) oder dessen einzelne Teilstücke am Brennerrohr (1) durchgehend eine gleiche Dicke aufweisen und dass die zugeordneten Vorsprünge (8) an der Vorderseite des Stützrohres (3) derart schräg angebracht sind, dass sich eine in Umfangsrichtung verkleinernde Kammer (9) unter jedem Vorsprung (8) ergibt, welche beim radialen Verdrehen des Brennerrohres (1) ein Verspannen mit dessen zugeordnetem Bund (10) oder mit dessen einzelnen Teilstücken nach Art eines Bajonettverschlusses sicherstellt.

7. Mischeinrichtung nach einem der Ansprüche 1 bis 6,
**dadurch gekennzeichnet, dass** der oder die Vorsprünge (8) auf dem Umfang an der Vorderseite des Stützrohres (3) angeschweißt sind.

8. Mischeinrichtung nach einem der Ansprüche 1 bis 7,
**dadurch gekennzeichnet, dass** eine Sicherungsvorrichtung das Verdrehen das Brennerrohres (1) in radialer Richtung gegenüber dem Stützrohr (3) verhindert.

9. Mischeinrichtung nach einem der Ansprüche 1 bis 8,
**dadurch gekennzeichnet, dass** Brennerrohr (1) und Stützrohr (3) im Bereich des mindestens einen Vorsprungs (8) mit der mindestens einen nach innen offenen Kammer (9) fixiert sind, in dem ein Vorsprung (8) einen radial hervorspringenden Bund (10) des Brennerrohres (1) übergreift und durch Umformbearbeitung an diesem nachträglich zur Anlage gebracht ist.
